# EUROPEAN PATENT SPECIFICATION

(11) **EP 2 014 490 B1**
(45) Date of publication and mention of the grant of the patent: **25.08.2010**
(21) Application number: 07425435.0
(22) Date of filing: 13.07.2007
(51) Int. Cl.: B60H 1/00, F16C 1/18, G05G 7/10

(54) **Rotating control assembly with double cable**
Drehbedienungsvorrichtung mit zweifachem Kabel
Dispositif de commande rotatif à double câble

(43) Date of publication of application: 14.01.2009
(73) Proprietor: DENSO THERMAL SYSTEMS S.p.A., 10046 Poirino (Torino) (IT)
(72) Inventor: Ferrarese, Claudio, 10046 Poirino (Torino) (IT)
(74) Representative: Marchitelli, Mauro

(56) References cited:
- FR-A- 726 357
- FR-A- 2 793 194
- JP-A- 52 041 788
- JP-A- 2003 226 131
- JP-A- 2004 210 188
- US-A- 3 186 251

## Description

The present invention relates to a rotating control assembly with double cable particularly utilizable for the control of treatment and air distribution systems in vehicles.

More precisely, the invention relates to a control assembly including a control device and an actuator device, both having a rotating pulley and connected together by two cables both fixed to the pulley of the control device and to the pulley of the actuator device.

Assemblies of this kind are commonly known in the sector as "pull-pull"-type controls, as the actuator device is controlled in both rotation directions by means of a pulled cable. Examples of such assemblies are known, for example, from documents US 4 936 159, EP-A-741 252, EP-A-1 177 923.

JP2004210188 (A) discloses a control cable device comprising a control pulley and an actuating pulley disposed separately from each other and a control cable wrapped around between both pulleys. A part of the control cable positioned between the pulleys is slidably held by an outer cable. A holding tool is mounted to the end of the outer cable on the side of the actuating pulley. The holding tool is inserted into a guide section fixed to a heater unit case, and biased by a helical compression spring.

JP52041788 (A) discloses a remote control device adapted to control automatically looseness of a cable connecting an operating member and a driven member.

JP2003226131 (A) discloses a damper drive mechanism for vehicular heater control comprising a damper for adjusting the air quantity carried in a duct and a pulley remotely controlled by a double-line type cable. The shaft of the pulley is supported on a base mounted on the wall of a duct by fitting type connecting method.

The object of the present invention is to provide a rotating control assembly with double cable which is simpler and less expensive than devices of a known type and which consists of a lower number of components. A further object of the present invention is to provide a control assembly which can be easily configured for the use in different applications.

According to the present invention, such objects are achieved by a rotating control assembly having the features forming the subject of claim 1.

The present invention will be now described in detail with reference to the enclosed drawings, given purely by way of not limiting example, in which:
- figure 1 is a perspective view of a control assembly according to the present invention,
- figure 2 is an exploded perspective view of the control device indicated by the arrow II in figure 1,
- figure 3 is an exploded perspective view of the actuator device indicated by the arrow III in figure 1, and
- figure 4 is an exploded perspective view showing a variant of the actuator device of figure 3.

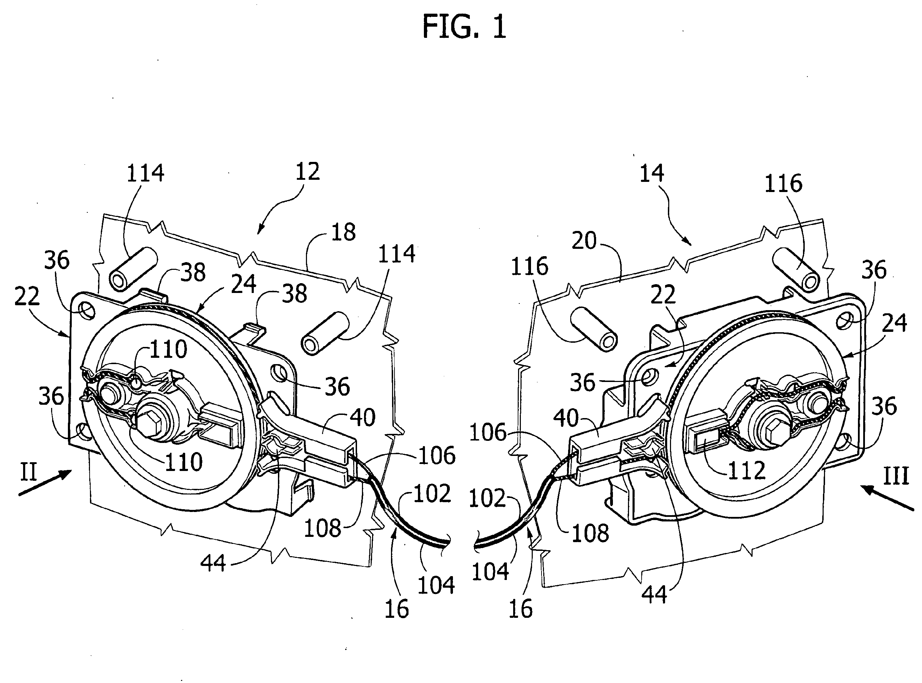

With reference to figure 1, a rotating control assembly with double cable according to the present invention is indicated by 10. The control assembly 10 includes a control device 12 and an actuator device 14, connected together by means of a flexible transmission 16 with a double cable.

The control device 12 and the actuator device 14 are intended to be fixed to respective supports 18, 20. For example, the control device 12 could be fixed to a support 18 arranged in correspondence with the dashboard of a vehicle while the actuator device 14 could be fixed to the casing of a treatment and air distribution assembly. The control assembly 10 can be used, for example, for adjusting the temperature of the air flow introduced within the compartment of the vehicle or for selecting the exit direction of the air flow (feet, front openings, side openings, defrost, etc.). The assembly 10 can also be used for selecting the inlet direction of the air flow to be treated (recirculation or external air). In general, the control assembly 10 can be used in all applications in which it is required a remote operation of a an actuator device through a rotating control.

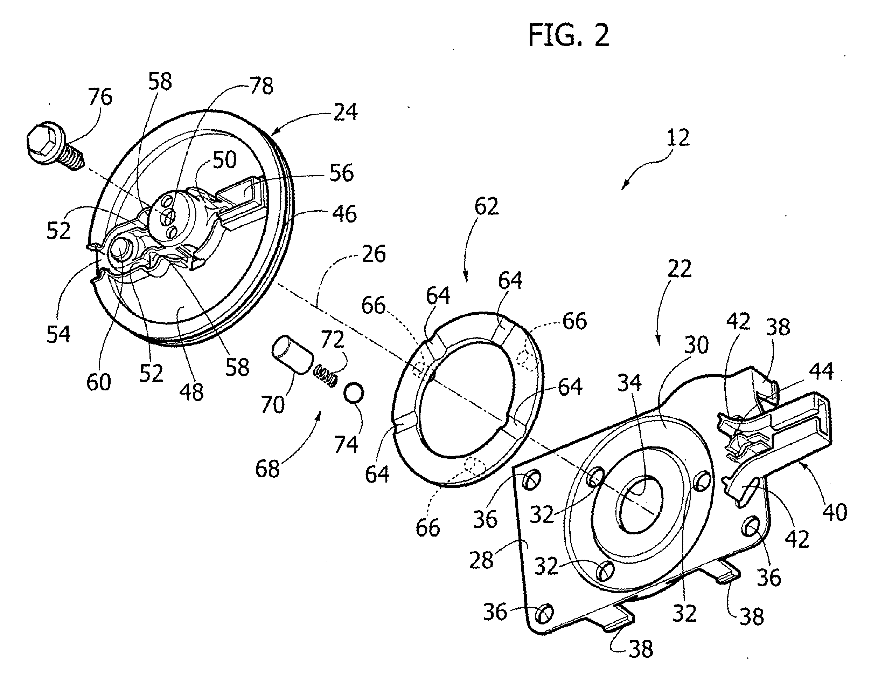

With reference to figure 2, the control device 12 includes a substantially plate-shaped base 22 and a pulley 24 rotatably mounted with respect to the base 22 around an axis 26. Preferably, both the base 22 and the pulley 26 are made of an injection-molded plastic material. The base 22 has a front wall 28 with a depressed annular track 30, in which a series of holes 32 are formed. At the center of the annular track 30 a through hole 34 is formed. The base 22 has fixing holes 36 preferably arranged in correspondence with respective angles of the base 22. The base 22 is further equipped with resilient teeth 38 protruding from the front wall 28 in the direction opposite to the side of the wall 28 on which the track 30 is formed. The base 22 further includes an integral guide portion 40 equipped with two elastically deformable wings 42 arranged above the front wall 28. Between the two wings 42, a fixing seat 44 is preferably provided.

The pulley 24 includes a circumferential groove 46 for winding the control cables. The pulley 24 has a front wall 48 equipped with a central hub 50. On the front wall 48 of the pulley 24, two protruding guides 52 are formed, symmetrically arranged with respect to a diametral axis of the pulley. The two guides 52 are opened on the front side of the pulley and are extending from opposite parts around the central hub 50. At a first end, the two guides 52 communicate with the circumferential groove 46 through an interruption zone 54. At the opposite end, the two guides 52 end in a prismatic-shaped seat 56. The guides 52 further have respective fixing seats 58 formed by enlarged portions and with a circular profile of the guides 52. The two fixing seats 58 are located in the opposite part with respect to the prismatic seat 56 relative to a diametral axis of the pulley 24. The pulley 24 further includes a housing 60 opened on the side of the pulley 24 opposite to the side on which the guides 52 are formed.

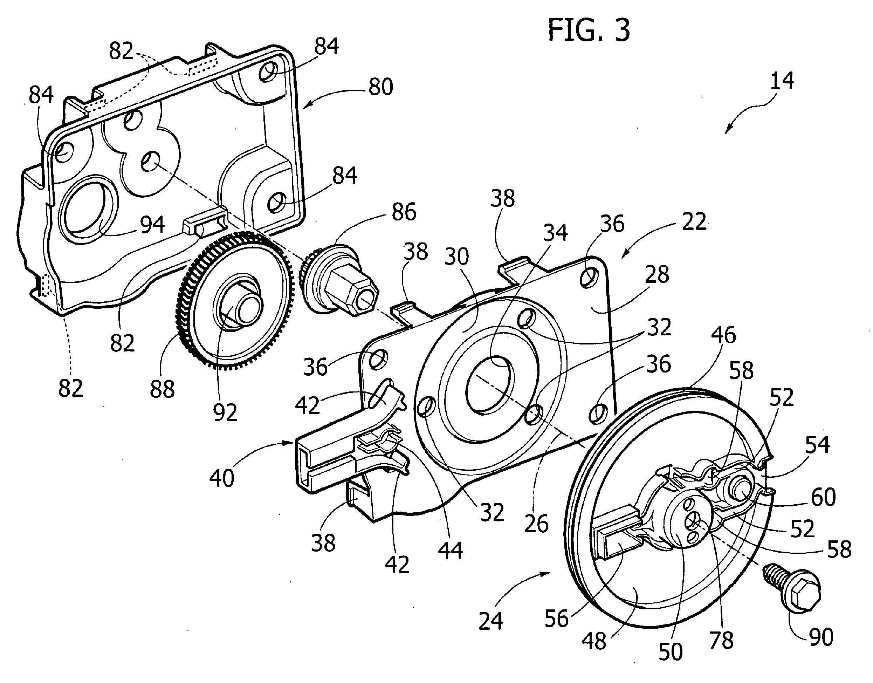

With reference to figures 2 and 3, according to the present invention, the base 22 and the pulley 24 of the actuator device 14 are identical to the base 22 and the pulley 24 of the control device 12. As it will result apparent in the following, the base 22 and the pulley 24 are configured so as to be indifferently associated with the specific components of the control device and the actuator device. The advantages resulting from the possibility of using the same main components for the control device 12 and the actuator device 14 are considerable, both from the point of view of the production costs and the point of view of the assembly simplicity of the control assembly.

With reference to figure 2, the control device 12 includes a positioning ring 62 having, on a first face, a plurality of retaining notches 64 and, on the opposite face, a series of protruding pins 66 intended for engaging the holes 32 of the base 22. The actuator device 12 further includes a retaining device 68 inserted in the housing 60 of the pulley 24 and including a cylindrical casing 70, a spring 72 and an engagement element 74 consisting, for example, of a ball.

The engagement member 74 is intended for sliding on the front wall of the positioning ring 62 and selectively engaging the retaining seats 64 for marking the angular position of the pulley 24 with respect to the base 22. The pulley 24 is restrained in an axial direction relative to the base 22 through a screw 76 which engages a hole 78 of the hub 50.

With reference to figure 3, the actuator device 14 includes a box-shaped casing 80 intended for coupling with the base 22. The casing 80 has an open edge on which the base 22 is applied substantially like a cover. Within the casing 80 snap-engagement seats 82 are provided, in which the resilient teeth 38 of the base 22 are snap-engaged. The casing 80 is further equipped with through holes 84 aligned with the holes 36 of the base 22.

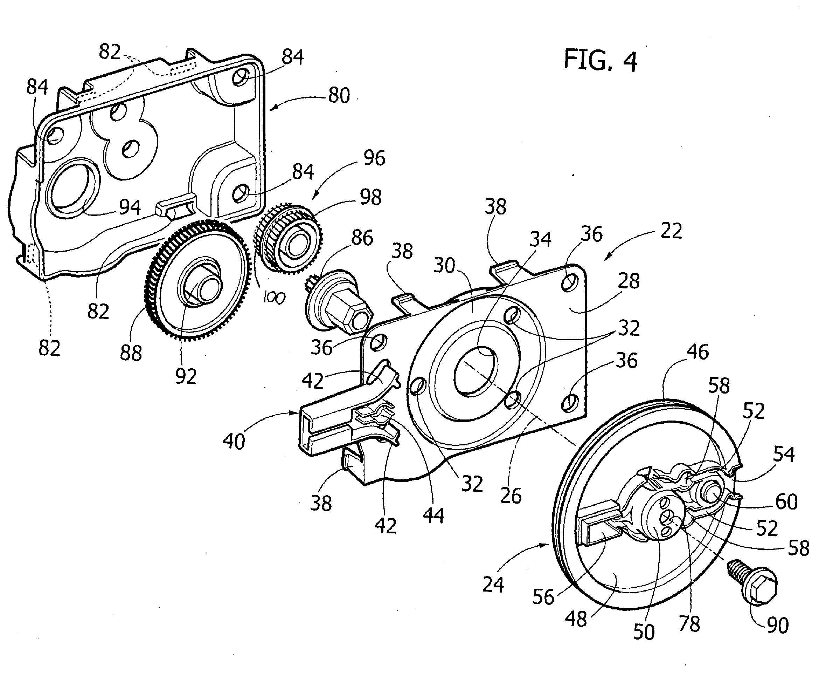

Two gear wheels 86, 88, engaged together, are housed within the casing 80. The gear wheel 86 is fixed to the hub 50 of the pulley 24 through a screw 90. The wheel 88 has an output element 92 extending outside of the casing 80 through an opening 94. The gear drive 86, 88 allows to change the working angle of the output element 92 with respect to the working angle of the pulley 24. It is possible to change the gear ratio of the gear drive 86, 88 for adapting the actuator device 14 depending on the destination of the control assembly. As a function of the different type of use, the actuator device 14 can be equipped with a different gear drive 86, 88 while maintaining unaltered the remaining part of the actuator device structure. For example, in figure 4 a double toothing 96 is provided, having a first toothing 98 which engages the wheel 86 and a second gear teeth 100 which engages the wheel 88. In this way, the inversion of the rotation movement of the outlet element 92 with respect to the pulley 24 is obtained.

Also the control device 12 can be configured as depending on the destination, by replacing the positioning ring 62 with a ring of a different type, for example with a different spacing amongst the retaining notches 64 for the purpose of varying the marking positions of the pulley 24. Also the force with which the pulley 24 of the control device 12 is kept within the individual retaining positions can be changed, by changing the depth of the retaining notches 64 or the stiffness of the spring 72.

With reference to figure 1, the flexible transmission 16 includes two parallel sheaths 102, 104 fixed together and within which respective cables 106, 108 are slidably inserted. Cables 106, 108 are inserted within portions of the guide 40 of the bases 22 of the control device 12 and the actuator device 14, and are wound on respective parts of the circumferential grooves 46 of the pulleys 24. Each cable 106, 108 has, at a first end, a stop member 110 which is hooked in a respective seat 58 of the pulley 24, for example the pulley of the control device 12. The opposite ends of the two cables 106, 108 are both fixed to a single fixing element 112 housed within the seat 56 of the pulley 24, for example the pulley of the actuator device 14. The resilient wings 42 elastically press on the cables 106, 108 in the immediate proximity of the zones in which cables 106, 108 are wound on the pulleys 24. The elastic force applied by the wings 42 to the cables 106, 108 allows to compensate the plays of the flexible transmission.

The control assembly 10 could be equipped with a third cable (not shown) having the purpose of stiffening the flexible transmission 16. If present, the third cable has stopping members at its ends, which are introduced within the seats 44 of the bases 22. The third cable, if present, would be slidable within a third sheath arranged between the sheaths 102, 104.

The base 22 of the control device 12 is fixed to the support 18 through screws or similar fixing members which are extending through holes 36 and engage corresponding fixing portions 114 provided on the support 18. Likewise, the actuator device 14 is fixed to the support 20 through screws or similar fixing members which are extending through the aligned holes 36, 84 of the base 22 and the casing 80 and which engage corresponding members 116 of the support 20.

## Claims

1. Rotating control assembly with double cable, including a control device (12) and an actuator device (14) both having a respective rotating pulley (24) and connected together by two cables (106, 108) both fixed to the pulley (24) of the control device (12) and to the pulley (24) of the actuator device (14), the pulley (24) of the control device (12) and the pulley (24) of the actuator device (14) being identical, **characterized in that** each of said pulleys (24) being carried by a respective substantially plate-shaped base (22), the base (22) of the control device (12) being identical to the base (22) of the actuator device (14), said base (22) having first fixing means (36) for fastening the control device (12) and the actuator device (14) to respective supports (18, 20) and second fixing means (38) for fastening the base (22) of the actuator device (14) to a box-shaped casing (80) like a cover, said box-shaped casing (80) housing a gear drive (86, 88, 96) operatively arranged between the pulley (24) of the actuator device (14) and an output element (92).

2. Control assembly according to claim 1, **characterized in that** the control device (12) includes a positioning ring (62) having retaining notches (64) and being arranged between the pulley (24) and the base (22), the pulley (24) having a housing (60) in which a retaining device (68) is inserted, including a casing (70); a resilient member (72) and a retaining member (74) elastically pressed towards said positioning ring (62).

3. Control assembly according to any one of the preceding claims, **characterized in that** the pulley (24) has a circumferential groove (46) which communicates with two guides (52) formed on a front face (48) of the pulley (24), said guides being equipped with enlarged portions forming two fixing seats (58) and communicating with an additional fixing seat (56), the fixing seats (52) and the additional fixing seat (56) being arranged on opposite parts of a central hub (50).

4. Control assembly according to any one of the preceding claims, **characterized in that** the base (22) includes an integral guide portion (40) equipped with two resilient wings (42) which press on respective parts of cables (106, 108) in the immediate proximity of the zones in which the cables (106, 108) are wound on the respective pulley (24).

## Patentansprüche

1. Drehsteueranordnung mit einem Doppelkabel, aufweisend eine Steuervorrichtung (12) und eine Aktuatorvorrichtung (14), die jeweils eine Drehriemenscheibe (24) haben und durch zwei Kabel (106, 108) verbunden sind, die beide an der Riemenscheibe (24) der Steuervorrichtung (12) und der Riemenscheibe (24) der Aktuatorvorrichtung (14) befestigt sind, wobei die Riemenscheibe (24) der Steuervorrichtung (12) und die Riemenscheibe (24) der Aktuatorvorrichtung (14) identisch sind, **dadurch gekennzeichnet, dass** jede Riemenscheibe (24) jeweils an einer im wesentlichen plattenförmigen Basis (22) sitzt, wobei die Basis (22) der Steuervorrichtung (12) gleich der Basis (22) der Aktuatorvorrichtung (14) ist, die Basis (22) eine erste Befestigungseinrichtung (36) zur Befestigung der Steuervorrichtung (12) und der Aktuatorvorrichtung (14) an jeweiligen Halterungen (18, 20) und eine zweite Befestigungseinrichtung (38) zur Befestigung der Basis (22) der Aktuatorvorrichtung (14) an einem kastenförmigen Gehäuse (80) ähnlich einem Deckel hat, und das kastenförmige Gehäuse (80) einen Zahnradantrieb (86, 88, 96) aufnimmt, der funktionsmäßig zwischen der Riemenscheibe (24) der Aktuatorvorrichtung (14) und einem Ausgangselement (92) angeordnet ist.

2. Steueranordnung nach Anspruch 1, **dadurch gekennzeichnet, dass** die Steuervorrichtung (12) einen Positionierring (62) hat, der Haltenuten (64) aufweist und zwischen der Riemenscheibe (24) und der Basis (22) angeordnet ist, wobei die Riemenscheibe (24) ein Gehäuse (60) aufweist, in das eine Halteeinrichtung (68) eingesetzt ist, die ein Gehäuse (70), ein Federelement (72) und ein Halteelement (74) aufweist, das elastisch gegen den Positionierring (62) gedrückt ist.

3. Steueranordnung nach einem der vorhergehenden Ansprüche, **dadurch gekennzeichnet, dass** die Riemenscheibe (24) eine Umfangsnut (46) hat, die mit zwei Führungen (52) in Verbindung steht, die an der Vorderseite (48) der Riemenscheibe (24) ausgebildet sind, wobei die Führungen mit Erweiterungen versehen sind, die zwei Fixiersitze (58) bilden, und mit einem zusätzlichen Fixiersitz (56) in Verbindung stehen, der an gegenüberliegenden Teilen einer zentralen Nabe (50) angeordnet sind.

4. Steueranordnung nach einem der vorhergehenden Ansprüche, **dadurch gekennzeichnet, dass** die Basis (22) einen integralen Führungsabschnitt (40) aufweist, der mit zwei federnden Flanschen (42) versehen ist, die auf entsprechende Teile von Kabeln (106, 108) in unmittelbarer Nähe der Bereiche drücken, in denen die Kabel (106, 108) auf die jeweilige Riemenscheibe (24) gewickelt sind.

## Revendications

1. Ensemble de commande rotatif avec un double câble, comprenant un dispositif de commande (12) et un dispositif actionneur (14) possédant tous les deux une poulie rotative respective (24) et reliés ensemble par deux câbles (106, 108) tous les deux fixés à la poulie (24) du dispositif de commande (12) et à la poulie (24) du dispositif actionneur (14), la poulie (24) du dispositif de commande (12) et la poulie (24) du dispositif actionneur (14) étant identiques, **caractérisé en ce que** chacune desdites poulies (24) est supportée par une base respective sensiblement en forme de plaque (22), la base (22) du dispositif de commande (12) étant identique à la base (22) du dispositif actionneur (14), ladite base (22) possédant des premiers moyens de fixation (36) destinés à fixer le dispositif de commande (12) et le dispositif actionneur (14) à des supports respectifs (18, 20) et des seconds moyens de fixation (38) destinés à fixer la base (22) du dispositif actionneur (14) à un carter en forme de boîte (80) comme un couvercle, ledit carter en forme de boîte (80) logeant un entraînement par engrenage (86, 88, 96) agencé de façon opérationnelle entre la poulie (24) du dispositif actionneur (14) et un élément de sortie (92).

2. Ensemble de commande selon la revendication 1, **caractérisé en ce que** le dispositif de commande (12) comprend un anneau de positionnement (62) possédant des encoches de retenue (64) et agencé entre la poulie (24) et la base (22), la poulie (24) possédant un logement (60) dans lequel un dispositif de retenue (68) est inséré, comprenant un boîtier (70), un élément élastique (72) et un élément de retenue (74) comprimé de façon élastique vers ledit anneau de positionnement (62).

3. Ensemble de commande selon une quelconque des revendications précédente, **caractérisé en ce que** la poulie (24) comporte une rainure circonférentielle (46) qui communique avec deux guidages (52) formés sur une face avant (48) de la poulie (24), lesdits guidages étant équipés de parties agrandies formant deux sièges de fixation (58) et communiquant avec un siège de fixation supplémentaire (56), les sièges de fixation (52) et le siège de fixation supplémentaire (56) étant agencés sur des parties opposées d'un moyeu central (50).

4. Ensemble de commande selon une quelconque des revendications précédente, **caractérisé en ce que** la base (22) comprend une partie de guidage intégrée (40) équipée de deux ailes élastiques (42) qui appuient sur des parties respectives des câbles (106, 108) dans la proximité immédiate des zones dans lesquelles les câbles (106, 108) sont enroulés sur la poulie respective (24).
